# EUROPÄISCHE PATENTSCHRIFT

(11) **EP 2 898 350 B1**
(45) Veröffentlichungstag und Bekanntmachung des Hinweises auf die Patenterteilung: **15.11.2017**
(21) Anmeldenummer: 13791728.2
(22) Anmeldetag: 13.09.2013
(51) Int. Cl.: G01T 3/00, G01T 3/06, H01J 47/12

(54) **NEUTRONENDETEKTOREINHEIT SOWIE NEUTRONENDETEKTORANORDNUNG**
NEUTRON DETECTION UNIT AND NEUTRON DETECTION ARRANGEMENT
UNITÉ POUR LA DÉTECTION DE NEUTRONS ET ARRANGEMENT DE DÉTECTEUR DE NEUTRONS

(30) Priorität: 18.09.2012 DE 102012108766
(43) Veröffentlichungstag der Anmeldung: 29.07.2015
(73) Patentinhaber: Forschungszentrum Jülich GmbH, 52425 Jülich (DE); CDT Cascade Detector Technologies GmbH, 69123 Heidelberg (DE); Ruprecht-Karls-Universität Heidelberg, 69117 Heidelberg (DE)
(72) Erfinder: LENNERT, Peter, 64646 Heppenheim (DE); KLEIN, Martin, 68309 Mannheim (DE); SCHMIDT, Christian, J., 69198 Schriesheim (DE); SCHWEIKA, Werner, 52428 Jülich (DE)
(74) Vertreter: Naeven, Ralf
(86) Internationale Anmeldenummer: PCT/DE2013/100326
(87) Internationale Veröffentlichungsnummer: WO 2014/044250

(56) Entgegenhaltungen:
- EP-A1- 0 994 367
- US-A- 3 614 437
- US-A1- 2006 017 000
- US-A1- 2011 215 251
- HENSKE M ET AL: "The B based Jalousie neutron detector An alternative for He filled position sensitive counter tubes", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, Bd. 686, 21. Mai 2012 (2012-05-21), Seiten 151-155, XP028400167, ISSN: 0168-9002, DOI: 10.1016/J.NIMA.2012.05.075 [gefunden am 2012-06-02] in der Anmeldung erwähnt
- S. D. HUNTER, G.A. DE NOLFO, L.M. BARBIER, J.T. LINK, S. SON,S.R. FLOYD, N. GUARDALA, M. SKOPEC, B. STARK: "Neutron Imaging Camera", SPIE, PO BOX 10 BELLINGHAM WA 98227-0010 USA, Bd. 6954, 1. April 2008 (2008-04-01), XP040437157,
- BUFFET J C ET AL: "Advances in detectors for single crystal neutron diffraction", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, Bd. 554, Nr. 1-3, 1. Dezember 2005 (2005-12-01), Seiten 392-405, XP027783183, ISSN: 0168-9002 [gefunden am 2005-12-01]
- HÖGLUND CARINA ET AL: "BC thin films for neutron detection", JOURNAL OF APPLIED PHYSICS, AMERICAN INSTITUTE OF PHYSICS, 2 HUNTINGTON QUADRANGLE, MELVILLE, NY 11747, Bd. 111, Nr. 10, 15. Mai 2012 (2012-05-15) , Seiten 104908-104908, XP012157584, ISSN: 0021-8979, DOI: 10.1063/1.4718573 [gefunden am 2012-05-23]

## Beschreibung

Die Erfindung betrifft eine Neutronendetektoreinheit für thermische Neutronen gemäß dem Oberbegriff des Anspruchs 1 sowie eine Neutronendetektoranordnung.

Da thermische Neutronen selbst nicht ionisierend wirken, werden sie nach allgemein bekanntem Stand der Technik über Kernreaktionen mit geeigneten Wirkungsquerschnitten nachgewiesen, bei denen ionisierende Teilchen entstehen. Die ionisierenden Teilchen dienen in einem Zählgas zur Erzeugung von Ladungsträgern, die mittels eines elektrischen Feldes aufgefangen und festgestellt werden. Nach diesem Prinzip fungierende Zählrohre sind allgemein bekannt. Als geeignete Materialien für die vorgenannten Kernreaktionen werden insbesondere ¹⁰B, ⁶Li oder ³He eingesetzt, die jeweils als Konvertermaterial bezeichnet werden.

Welches Konvertermaterial verwendet wird, kann insbesondere von seiner Verfügbarkeit und/oder vom Einsatzzweck des verwendeten Neutronendetektors abhängen. Für thermische Neutronen wurde in der Vergangenheit bevorzugt das gasförmige Konvertermaterial ³He verwendet, wenn eine hohe Neutronenempfindlichkeit und eine geringe Empfindlichkeit auf Gammastrahlung gefragt waren. ³He ist chemisch inert, damit gesundheitlich weitgehend unbedenklich und erlaubt eine gute räumliche Auflösung. ³He wurde jedoch typischerweise bei Drücken von 10 bar und höher betrieben. Hohe Drücke eines Konvertergases sind im Stand der Technik angestrebt, um bei gegebenem Volumen zu höheren Wahrscheinlichkeiten der Konversionsereignisse und damit zu höheren Nachweiswahrscheinlichkeiten zu gelangen. Derartige Drücke stellen für Proportionalzählrohre üblicher Dimensionen kein Problem dar, führen jedoch bei großflächigeren Detektoren zu mechanischen Herausforderungen, die wegen einer dann zunehmenden Behinderung des Durchtritts der zu detektierenden Neutronen nicht mit beliebig dicken Wandstärken der Detektorwände gelöst werden können. ³He ist allerdings für Messungen und wissenschaftliche Anwendungen kaum verfügbar oder teuer.

Ein alternativer, im Vergleich zum ³He wesentlich kostengünstigerer gasförmiger Konverter für thermische Neutronen ist ¹⁰BF₃. Wie ³He dient ¹⁰BF₃ gleichzeitig als Ionisationsgas, hat aber zum Nachteil, dass es giftig ist. Zum anderen wird zum derzeitigen Stand der Technik bemängelt, dass ¹⁰BF₃ als Konverter- und Zählergas lediglich bei Drücken bis maximal etwa 2 bar betrieben werden kann und somit im Vergleich zu ³He bei den bekannten Detektoren zu geringeren Nachweiswahrscheinlichkeiten führt.

Als Alternative zu gasförmigem Konvertermaterial wird festes Konvertermaterial verwendet, das z. B. als Schichtmaterial eingesetzt wird. Aus der DE 32 33 442 A1 ist ein großflächiger Werkstor-Neutronenmonitor bekannt, der aus Proportionalzählern aufgebaut ist. Der dort offenbarte Proportionalzähler umfasst einen geschlossenen und abgedichteten Metallkasten, dessen Innenwandflächen mit einem mit ⁶Li angereicherten Metall beschichtet sind. Im Inneren des mit einem Zählergas gefüllten Kastens ist eine mehrzellige Proportionalzählerkonstruktion angeordnet. Eine Anordnung solcher Proportionalzähler kann zu Kontrollzwecken an einer Pforte, z. B. einem Werkstor, für die Erfassung von Neutronen emittierenden Stoffen eingesetzt werden. Die Vielzahl der in dem jeweiligen Kasten angeordneten als Anoden geschalteten und innerhalb einer einzigen Ebene angeordneten Zähldrähte dient zur Erhöhung der Nachweiswahrscheinlichkeit. Eine Ortsauflösung innerhalb des Proportionalzählers ist dabei nicht gefordert.

Ein weiterer großflächiger Detektor ist aus der DE-OS 2 115 265 bekannt, bei dem mehrere flächige Zählelemente hintereinander zwischen großflächigen Platten mit einer ¹⁰B enthaltenden Bohrbeschichtung angeordnet sind. Als Zählgas ist Argon mit 10% Methan offenbart. Der Bau in die Tiefe, d. h. die Hintereinanderanordnung von mehreren flächenhaften Zählelementen, dient allein zur Erhöhung der Nachweiswahrscheinlichkeit. Eine örtliche Auflösung innerhalb einer Detektoreinheit ist nicht offenbart.

Aus der DE-OS 1 919 824 ist eine Neutronendetektoreinheit bekannt, die innerhalb des Detektorgehäuses mehrere Anodenstreifen und Kathodenstreifen aufweist, die parallel zueinander oder gekreuzt zueinander verlaufen können. Sowohl die Anodenstreifen als auch die Kathodenstreifen liegen jeweils innerhalb einer Fläche, die eben oder kreissektorförmig gebogen sein kann. Die Anoden- und Kathodenstreifen bilden jeweils eine Mehrzahl von Auslesezellen. Durch eine Koinzidenzschaltung zwischen den Anoden- und Kathodenstreifen ist eine örtliche Auflösung innerhalb der durch die Auslesezellen gegebenen Auslesefläche möglich. Als Konvertermaterial wird ¹⁰BF₃ oder ³He offenbart. Die offenbarte Anordnung erlaubt somit nur eine flächige Ortsauflösung. Die Nachweisempfindlichkeit ist durch die geringe Tiefe des Detektors begrenzt.

Ein Neutronendetektor der im Oberbegriff des Anspruchs 1 genannten Art sowie eine Neutronendetektoranordnung gemäß dem Oberbegriff des Anspruchs 12 sind aus dem Artikel "The 10B based Jalousie neutron detector - An alternative for 3He filled position sensitive counter tubes" von M. Henske et al. (Nuclear Instruments and Methods in Physics Research A 686 (2012), 151 bis 155) bekannt. Dort ist eine Neutronendetektoranordnung nach einem so genannten Jalousie-Konzept offenbart, bei dem die einzelnen Neutronendetektoreinheiten ähnlich den Lamellen einer Jalousie zueinander angeordnet werden. Die Neutronendetektoreinheiten selbst weisen jeweils ein Detektorgehäuse auf, welches auf der Innenseite mit ¹⁰B beschichtet ist. Des Weiteren sind zwei Ebenen von parallel zueinander verlaufenden Anodendrähten vorgesehen, wobei zwischen den Anodendraht-Ebenen eine Ebene mit senkrecht zu den Anodendrähten und parallel zueinander verlaufenden Kathodenstreifen vorgesehen ist. Die Kathodenstreifen sind beidseitig mit ¹⁰B beschichtet. Als Zählgas wird eine Mischung aus Argon und CO₂ offenbart. Die einzelnen Neutronendetektoreinheiten sind in der Gesamtanordnung so ausgerichtet, dass die Gehäusewände und damit die Ebene der Kathodenstreifen einen Winkel von z. B. 10° gegenüber der Neutronenflugrichtung aufweisen. Mit dieser Maßnahme wird erreicht, dass ein Neutron beim Durchtritt durch die Detektoranordnung mehrere Detektoreinheiten und dabei z. B. acht Bohrschichten durchläuft, so dass eine hohe Konversionswahrscheinlichkeit und damit Nachweiswahrscheinlichkeit erreicht werden kann. Die Anodendrähte sind im Wesentlichen senkrecht zur Neutronenflugrichtung ausgerichtet.

Mit einer Neutronendetektoranordnung nach dem Jalousie-Konzept können mit den lamellenförmigen und nach dem vorbeschriebenen Prinzip angeordneten Detektoreinheiten gleicher Bauweise große Detektorflächen realisiert werden, die topologisch auf eine ebene Fläche abgerollt werden können, z.B. große ebene oder zylindermantelförmige Detektorflächen. Sofern zur Realisierung eines 4π-Detektors ein möglichst vollständiger Raumwinkel abgedeckt werden soll, wären die Stirnflächen ebenfalls mit Detektoreinheiten zu verschließen. Bei Einsatz jeweils einer planen Fläche an den Stirnseiten, müsste diese im Vergleich zum Radius des Zylindermantels in größerer Distanz zum Streuzentrum aufgebaut werden. Die Stirnseiten könnten aber auch mit jeweils einer weiteren Teilzylindermantelfläche verschlossen werden, welche jedoch dann aus geometrischen Gründen einen um den Faktor √2 größeren Radius aufweisen muss. Um die Detektorfläche kleiner zu halten, wäre es erforderlich, die Stirnflächen aus lauter verschieden großen, individuell zu fertigenden Detektoreinheiten aufzubauen. US2011215251 A1 offenbart einen Neutronendetektor nach dem Oberbegriff der Ansprüche 1 und 12. Es ist nun Aufgabe der vorliegenden Erfindung, eine Neutronendetektoreinheit sowie eine Neutronendetektoranordnung zur Verfügung zu stellen, welche eine verbesserte Volumendetektion, d.h. eine Neutronendetektion mit einer örtlichen Auflösung der Konversionsereignisse in drei Dimensionen, ermöglicht.

Diese Aufgabe wird durch eine Neutronendetektoreinheit gemäß Anspruch 1 gelöst. Das Konvertergas kann ein einzelnes Gas oder ein Gasgemisch sein, wobei im Gasgemisch auch ein nicht als Konvertermaterial wirkender Bestandteil enthalten sein kann. Vorteilhafte Ausführungsformen der erfindungsgemäßen Neutronendetektoreinheit sind in den abhängigen Ansprüchen 2 bis 9, und 11 definiert.

Durch Einsatz eines Konvertergases ist es zunächst möglich, auf die aufwendige Beschichtung der Gehäusewände oder von Elektrodenelementen zu verzichten. Damit wird erstmals das Konzept verfolgt, durch eine Kombination eines Volumendetektors mit einem Konvertergas eine hohe Nachweiswahrscheinlichkeit zu erreichen. Es ist insbesondere möglich, das gasförmige Konvertergas, das - als Einzelgas oder Gasgemisch - gleichzeitig als Zählgas dient, bei geringen Drücken, insbesondere bei Drücken bis zu 1,5 bar, einzusetzen. Auch niedrigere Drücke können vorteilhaft sein, z.B. 1,1 bar oder Normaldruck sowie insbesondere solche Drücke, die nur geringfügig vom Druck der der Detektoreinheit umgebenden Atmosphäre abweichen. Dies erlaubt den Bau großer Detektoreinheiten, die grundsätzlich beliebig weit in die Tiefe gebaut werden können, wodurch wiederum die Detektionswahrscheinlichkeit für thermische Neutronen gegen 1 gebracht werden kann.

Bevorzugt wird die Neutronendetektoreinheit so ausgebildet, dass das Detektorgehäuse bei gegebener Art und gegebenem Druck des Konvertergases sowie bei gegebenem Wellenlängenbereich der zu detektierenden Neutronen eine für die Neutronenflugrichtung vorgesehene Tiefe aufweist, welche zu einer Nachweiswahrscheinlichkeit von mindestens 50 % führt. Weiter bevorzugt sind Nachweiswahrscheinlichkeiten von mindestens 60 %, weiter bevorzugt mindestens 70 %, mindestens 80 % oder mindestens 90 %.

Ein weiterer Vorteil des Einsatzes eines nur geringfügig vom umgebenden Atmosphärendruck abweichenden Druckes des Konvertergases ist die Möglichkeit, die Gehäusewände und insbesondere die einer Streuprobe oder Neutronenquelle zugewandte Gehäusewand, d.h. das Neutronen-Eintrittsfenster, dünn bauen zu können. Eine verringerte Wandstärke des Eintrittsfensters stellt ein geringeres Hindernis für die eintretenden Neutronen dar mit entsprechend verringerter Neutronenabsorption oder Neutronenstreuung im Wandmaterial.

Die Messung im Volumendetektor mit geeigneter Messtiefe bietet des Weiteren den Vorteil, aus einer Mehrzahl von festgestellten Konversionsereignissen auf eine mittlere Flugrichtung der detektierten Neutronen schließen zu können. Die sich aus der Abfolge von Konversionsereignissen ergebende Spur kann daher Rückschlüsse erlauben, ob die detektierten Neutronen unmittelbar aus der vorgesehenen Quelle, z.B. einer Streuprobe, stammen oder z.B. aus einer Fremdquelle oder aus Streuungen an Vorrichtungselementen, z.B. einer Detektorgehäusewand.

Mit der erfindungsgemäßen Volumendetektoreinheit können Neutronenkonversionen örtlich in allen drei Raumrichtungen sowie zeitlich definiert festgestellt werden. Durch die Messung in die Tiefe hinein können Parallaxprobleme vermieden werden. Die für einen Volumendetektor erforderliche erhöhte Zahl an Auslesekanälen kommt den modernen Anforderungen an Ratentauglichkeit moderner Neutronendetektoren, wie sie an modernen Neutronenspallationsquellen benötigt werden, vollkommen entgegen.

Als gasförmiges Konvertermaterial kann ein Gas oder Gasgemisch verwendet werden, welches zumindest eines der Isotope ³Helium, ⁶Lithium, ¹⁰Bor, gadolinium, ¹⁵⁷Gadolinium und/oder ²³⁵Uran aufweist.

Vorzugsweise wird als gasförmiges Konvertermaterial ¹⁰BF₃ oder ein ¹⁰BF₃ enthaltendes Gasgemisch verwendet. Dieses Konvertermaterial ist insbesondere für den Einsatz bei Drücken bis 1,5 bar hervorragend geeignet und ohne weiteres verfügbar.

Der Einsatz eines gasförmigen Konvertermaterials schließt es nicht aus, zusätzlich festes Konvertermaterial, z. B. in Form von Schichten, z. B. auf der Innenseite der Außenwände, in Zwischenwänden oder auf Elektroden, insbesondere den Kathodenelementen, einzusetzen. Hierdurch kann die Detektionswahrscheinlichkeit weiter erhöht werden.

Die erfindungsgemäße Neutronendetektoreinheit kann so aufgebaut sein, dass sich eine Vielzahl von Auslesezellen ergeben, die im Detektorgehäuse dreidimensional verteilt sind. Hierdurch wird ein Volumendetektor realisiert. Eine Vielzahl im Sinne der Erfindung ist gleichbedeutend mit mehr als 10. Eine Mehrzahl bedeutet mindestens zwei. Für eine möglichst effiziente Volumendetektion ist eine deutlich höhere Zahl als 10 der Auslesezellen vorteilhaft, z.B. mindestens 30 oder mindestens 50.

Die Definition einer Auslesezelle hängt von der Art und Weise der Ortsbestimmung von Konversionsereignissen ab. Die Ortsbestimmung kann z.B. über die Feststellung einer Koinzidenz von Signalen verschiedener nicht parallel zueinander verlaufender Elektroden erfolgen. Die Auslesezellen sind dabei durch die Kreuzungspunkte der Elektroden gegeben. Dies können in Neutronenflugrichtung projizierte Kreuzungspunkte zwischen zwei Anodenelementen, aber auch in Neutronenflugrichtung projizierte Kreuzungspunkte zwischen einem Anodenelement und einem z.B. draht- oder streifenförmig ausgebildeten Kathodenelement sein.

Alternativ zur Koinzidenzmessung kann der Ort des Ereignisses auch durch Ladungsteilung der Signale an beiden Enden eines als Zähldraht fungierenden Anodenelements oder durch Bestimmung der Signallaufzeiten ermittelt werden. In diesem Fall sind die Auslesezellen nicht mehr diskret sondern gehen entlang des Anodenelements kontinuierlich ineinander über.

Bei der Feststellung des Ortes des Konversionsereignisses sind für die Volumendetektion die Verteilung und Ausrichtung der Anodenelemente maßgeblich. Die Kathodenelemente sollen dabei im Idealfall so ausgeformt und angeordnet sein, dass sie an möglichst vielen der Anodenelemente mindestens ähnlich starke elektrostatische Felder erzeugen. Die Kathodenelemente können selbsttragend ausgebildet sein und sich z.B. zwischen den Anodenelementen erstrecken, z.B. streifenförmig oder flächig ausgedehnt in Kathodenebenen, oder die Anodenelemente umgeben, z.B. in einer dreidimensionalen wabenartigen Struktur, ähnlich einer Bienenwabe, wobei durch jedes Wabenelement ein Anodenelement hindurch geführt ist..

Die erfindungsgemäße Neutronendetektoreinheit kann auch so ausgebildet sein, dass das Detektorgehäuse durch eine Mehrzahl von äußeren Wandelementen begrenzt ist, wobei mindestens ein für den Eintritt der zu detektierenden Neutronen vorgesehenes Wandelement von Mitteln zur elektrischen Durchführung für Anodenelemente und/oder Kathodenelemente freigehalten ist.

Das derartig freigehaltene Wandelement stört den Neutronenflug deutlich weniger, kann weniger raumeinnehmend ausgebildet werden und wird als Neutronen-Eintrittsfenster im Einsatz einer Neutronenquelle oder einer Streuprobe zugewandt.

Insbesondere kann es vorteilhaft sein, wenn das Neutronen-Eintrittsfenster von Mitteln zum elektrischen Isolieren, von Mitteln zum elektrischen und/oder elektronischen Kontaktieren und/oder von Mitteln zum Fixieren von Anodenelementen und/oder Kathodenelementen freigehalten ist.

Des Weiteren kann es vorteilhaft sein, wenn mindestens ein an ein für den Eintritt der zu detektierenden Neutronen vorgesehenes Wandelement angrenzendes Seitenwandelement von Mitteln zur elektrischen Durchführung für Anodenelemente und/oder Kathodenelemente freigehalten ist. Vorzugsweise kann ein solches Seitenwandelement des Weiteren von Mitteln zum elektrischen Isolieren, von Mitteln zum elektrischen und/oder elektronischen Kontaktieren und/oder von Mitteln zum Fixieren von Anodenelementen und/oder Kathodenelementen freigehalten sein.

Sind relevante Seitenwandelemente, deren Flächen in der Regel zur erwarteten Neutronenflugrichtung einen spitzen Winkel aufweisen oder parallel hierzu verlaufen, möglichst weitgehend frei von den Neutronenflug störenden Elementen kann eine zumindest nahezu blindflächenfreie Detektoranordnung aufgebaut werden.

Dabei kann es insbesondere vorteilhaft sein, wenn die Mittel zur Fixierung, elektrischen Isolierung, Durchführung und/oder elektrischen oder elektronischen Kontaktierung von Anodenelementen an einem dem Eintrittsfenster gegenüberliegenden hinteren Wandelement angeordnet sind. In diesem Fall können die Anodenelemente parallel oder nahezu parallel zur Flugrichtung der Neutronen ausgerichtet werden.

Dabei kann es des Weiteren vorteilhaft sein, dass zumindest eine Teilanzahl der Anodenelemente U-förmig verläuft. Somit kann z.B. die Signaldurchführung, Spannungsversorgung und/oder Fixierung für beide Enden des betroffenen Anodenelements am selben Wandelement vorgesehen sein.

Zur Klarstellung sei hier erwähnt, dass unterschiedliche Wandelemente durch Eckwinkel voneinander abgegrenzt sein können aber auch ohne Winkel stetig ineinander übergehen können. Im letzteren Fall kennzeichnet sich ein Wandelement durch seine Funktion, z.B. als Eintrittsfenster für die Neutronen oder als Bereich der Durchführung von elektrischen Anschlüssen, oder seine räumliche Ausrichtung, z.B. bezogen auf die Neutronenflugrichtung vorderes, seitliches, oberes, unteres oder hinteres Wandelement.

Die Mittel zur Fixierung, elektrischen Isolierung, Durchführung und/oder elektrischen oder elektronischen Kontaktierung von Anodenelementen können aber auch jeweils an verschiedenen, z.B. einander gegenüberliegenden Wandelementen, vorgesehen werden.

Anodenelemente sind in der Regel sehr dünn ausgeführt, um eine hohe Feldstärke des elektrostatischen Feldes und damit eine geeignete Verstärkung des Konversionsereignisses im Zählergas zu gewährleisten. Anodenelemente sind daher in der Regel drahtförmig, bei entsprechender Mikrostrukturierung sind auch komplexere z. B. streifenförmige Strukturen möglich. Derartig dünne Strukturen sind nicht selbsttragend und müssen daher mechanisch gestützt oder gespannt werden. Das Stützen oder Spannen kann durch die Wandelemente selbst bewirkt werden. Die Wandelemente können dabei gleichzeitig zur Fixierung dienen. Es ist aber auch möglich, für das Stützen oder Spannen der Anodenelemente besondere, in die Detektoreinheit hineinragende Haltestrukturen vorzusehen, bevorzugt solche, die den Neutronenflug nicht oder nur unwesentlich stören.

Eine Neutronendetektoranordnung zur Detektion von Neutronen, insbesondere thermische oder kalte Neutronen, welche eine oder mehrere der erfindungsgemäßen Neutronendetektoreinheiten umfasst, erfüllt ebenfalls die vorgenannte technische Aufgabe.

Die vorgenannte Aufgabe wird des Weiteren bei einer Neutronendetektoranordnung gemäß dem Oberbegriff des Anspruchs 12 durch die kennzeichnenden Merkmale des Anspruchs 12 gelöst. Vorteilhafte Ausführungsformen der Neutronendetektoranordnung ergeben sich aus den Unteransprüchen 13 bis 14. Eine Neutronendetektoranordnung kann aus einer einzigen Neutronendetektoreinheit oder aus mehreren bestehen. In dieser Ausgestaltung der Erfindung ist die Ausrichtung der Elektroden innerhalb der Neutronendetektoranordnung, insbesondere der Anoden, relativ zur Flugrichtung der zu detektierenden Neutronen und damit relativ zu einer Streuprobe oder einer sonstigen Neutronenquelle wesentlich. Zumindest eine Teilanzahl der Anodenelemente verläuft zumindest überwiegend in ihrer Längsausrichtung parallel oder nahezu parallel zur Flugrichtung der zu detektierenden Neutronen.

"Nahezu parallel" bedeutet eine mögliche Abweichung der Flugrichtung der zu detektierenden Neutronen von der Verlaufsrichtung des Anodenelements von maximal 30° vorzugsweise kleiner als 15°. Dass die Anodenelemente überwiegend in ihrer Längsausrichtung den geforderten Verlauf aufweisen, bedeutet, dass dieser Verlauf für mehr als 50%, vorzugsweise für mehr als 75% der Länge des Anodenelements innerhalb der entsprechenden Neutronendetektoreinheit gilt.

Die Flugrichtung der zu detektierenden Neutronen relativ zur Detektoranordnung ist durch die Ausrichtung der Neutronendetektoranordnung zur maßgeblichen Quelle der Neutronen, z.B. einer Streuprobe, bestimmt.

Die Ausrichtung der Anodenelemente parallel oder nahezu parallel zur Flugrichtung der zu detektierenden Neutronen hat diverse erhebliche Vorteile. Werden die Anodenelemente mit geeigneter großer Länge gebaut und sind für die Neutronen auf ihrer Flugbahn entlang der Anodenelemente hinreichend viele Konversionsmöglichkeiten gegeben, kann grundsätzlich eine beliebig hohe Detektionswahrscheinlichkeit erreicht werden.

Die Konversionsmöglichkeit kann durch festes Konvertermaterial bereitgestellt werden, welches in geeigneten Abständen innerhalb des mindestens einen Neutronendetektorelements angeboten werden muss, z.B. durch auf Kathodenelemente aufgebrachte Konvertermaterialschichten.

Ein besonders vorteilhafter Kombinationseffekt ergibt sich jedoch durch den Einsatz eines Konvertergases, welches z.B. ¹⁰BF₃ enthält. Durch die Verwendung eines solchen Konvertergases - erforderlichenfalls ergänzt durch weitere Spurengase, wie z.B. CO₂ - bei z.B. Atmosphärendruck kann die mindestens eine Neutronendetektoreinheit nach Bedarf groß gebaut werden, so dass die Anodenelemente entsprechend lang ausgebildet werden können, z.B. im Bereich von 2 bis 5 Absorptionslängen der Neutronen. Der Druck des Konvertergases kann auch weniger als Atmosphärendruck betragen, z.B. zur Anpassung an einen entsprechend niedrigen Druck in der Umgebung der Messung, oder diesen übersteigen und z.B. bis zu max. 1,5 bar oder weiter bevorzugt weniger als 1,1 bar betragen. Der Nutzen der parallelen oder nahezu parallelen Ausrichtung der Anodenelemente wird bei Einsatz des Konvertergases optimiert.

Des Weiteren ermöglicht es die Ausrichtung der Anodenelemente parallel oder nahezu parallel zur Flugrichtung der Neutronen, die Neutronendetektoranordnung ohne Blindflächen aufzubauen. Wird die Neutronendetektoranordnung aus einer einzigen Neutronendetektoreinheit aufgebaut, kann auf störende parallel zur Flugrichtung der Neutronen verlaufende Zwischenwände komplett verzichtet werden. Es ist vorteilhaft, eventuell vorhandenen Zwischenwänden und auch Seitenwänden einen Winkel zur Flugrichtung der Neutronen zu geben, um eine Bewegung einzelner Neutronen allein innerhalb der Wand, also ohne oder mit nur kurzem Eintritt in das Innere einer Neutronendetektoreinheit, zu vermeiden. Eine solche Schrägstellung der Zwischenwände oder der Seitenwände innerhalb einer Neutronendetektoranordnung ist aus dem gleichen Grunde auch vorteilhaft für den Fall, dass die Anodenelemente nicht zumindest überwiegend parallel oder nahezu parallel zur Neutronenflugrichtung ausgerichtet sind. Der Winkel der Wandebene zur Neutronenflugrichtung kann z.B. 5° bis 45°, bevorzugt 5° bis 20° betragen.

Des Weiteren ist es möglich, die mindestens eine Neutronendetektoreinheit der Neutronendetektoranordnung so auszubilden und auszurichten, dass störenden Elemente, insbesondere die Signaldurchführungen für die Anodenelemente jeweils allein an einem der Neutronenquelle oder der Streuprobe abgewandten und damit einem Neutroneneintrittsfenster gegenüberliegenden hinteren Wandelement oder Wandbereich des entsprechenden Detektorgehäuses vorgesehen wird. Mathematisch ausgedrückt ist die geometrische Anordnung dergestalt, dass die nach außen zeigende Flächennormale des hinteren Wandelements mit dem Richtungsvektor der Neutronenstrahlung ein positives Skalarprodukt bildet. Somit kann das der Streuprobe oder der Neutronenquelle zugewandte und das Neutroneneintrittsfenster umfassende vordere Wandelement des jeweiligen Detektorgehäuses von den Eintritt der Neutronen in das Detektorgehäuse störenden Elementen freigehalten werden, z. B. von elektrischen Durchführungen oder Anschlüssen für die Signalauslese. Im Falle der Koinzidenzmessung kann ein Ende des Anodenelements in den Detektorraum hineinragen. Für eine Signallaufzeitmessung oder die Messung der Ladungsteilung kann ein Richtungswechsel, vorzugsweise mit einem U-förmigen Verlauf, für das Anodenelement vorgesehen werden.

Die erfindungsgemäßen Neutronendetektoreinheiten sind in ihrer äußeren Formgebung nahezu frei, weshalb die gesamte Neutronendetektoranordnung aus einer einzigen Neutronendetektoreinheit oder aus einer Zusammenstellung mehrerer Neutronendetektoreinheiten bestehen kann.

Es können große Neutronen-Eintrittsflächen für die Neutronendetektoranordnung realisiert werden, die einen beliebigen Raumwinkel, auch den vollständigen Raumwinkel von 4 π abdecken können. Die Neutronen-Eintrittsfläche wird durch die der Streuprobe zugewandte Vorderwand der Neutronendetektoreinheit oder der Gesamtheit der Vorderwände bei einer Mehrzahl von Neutronendetektoreinheiten gebildet. Durch die Neutronen-Eintrittsfläche ist die Detektorfläche gegeben, die idealerweise kugelförmig oder näherungsweise kugelförmig ist, aber auch die Form eines Zylindermantels aufweisen kann. Die Detektorfläche kann auch durch eine Abdeckung der Zylinderstirnflächen vergrößert werden, welche mittels der erfindungsgemäßen Neutronendetektoreinheiten bequem zu erreichen ist. Dabei ist eine Ausrichtung der Anodenelemente parallel oder nahezu parallel zur Flugrichtung der Neutronen nicht zwingend aber besonders vorteilhaft.

Die Neutronendetektoreinheiten können auch entsprechend den Lamellen gemäß der in der Beschreibungseinleitung dargestellten Neutronendetektoranordnung nach dem Jalousienprinzip ausgeführt sein.

Im Folgenden werden vorteilhafte Ausführungsformen der erfindungsgemäßen Neutronendetektoreinheit und der erfindungsgemäßen Neutronendetektoranordnung anhand von Figuren dargestellt.

Es zeigt in Prinzipdarstellung
- Fig. 1:: eine Neutronendetektoranordnung mit zwei Neutronendetektoreinheiten mit im Wesentlichen senkrecht zur Neutronenflugrichtung gespannten Anodendrähten,
- Fig. 2:: eine Neutronendetektoranordnung mit zwei Neutronendetektoreinheiten mit im Wesentlichen parallel zur Neutronenflugrichtung gespannten Anodendrähten und
- Fig. 3:: eine Neutronendetektoranordnung mit im Wesentlichen parallel zur Neutronenflugrichtung und auf zwei unterschiedliche Weisen gespannten Anodendrähten.

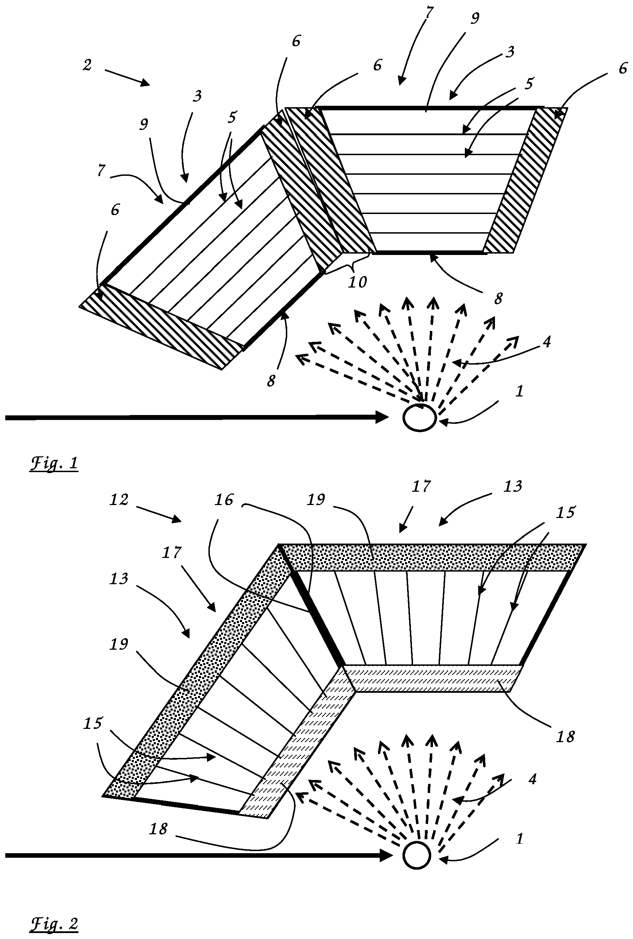

Fig. 1 zeigt ausschnittsweise eine um eine Streuprobe 1 für Neutronen 4 herum aufgebaute Neutronendetektoranordnung 2, die tatsächlich einen größeren Raumwinkel um die Streuprobe 1 herum umfassen soll. Der fett eingezeichnete Pfeil zeigt die Richtung aus der die Streuprobe 1 mit Neutronen 4 beschossen wird.

Zu der Neutronendetektoranordnung 2 sind zwei Neutronendetektoreinheiten 3 gezeigt mit im Wesentlich senkrecht zur Flugrichtung von zu detektierenden Neutronen 4 angeordneten Anodendrähten 5, die zwischen den Seitenwänden 6 des jeweiligen Detektorgehäuses 7 der Neutronendetektoreinheiten 3 gespannt sind. Zur Abdeckung eines größeren Raumwinkels können mehr als zwei Neutronendetektoreinheiten 3 vorgesehen werden.

Es sind hier beispielhaft jeweils sechs der Anodendrähte 5 in Neutronenflugrichtung zwischen einer Vorderwand 8 und einer Rückwand 9 des zugehörigen Detektorgehäuses 7 hintereinander zu sehen. Die Anordnung der Anodendrähte erlaubt somit eine Messung in die im Wesentlichen der Neutronenflugrichtung entsprechende Tiefe hinein. Der sich senkrecht zur Zeichenebene erstreckende Raum ist ebenfalls mit einer Vielzahl von in Fig. 1 nicht sichtbaren Anodendrähten 5 versehen, so dass durch die Neutronendetektoreinheiten 3 insgesamt ein Volumendetektor realisiert ist, der die Feststellung von Ort und Zeit von Konversionsereignissen im dreidimensionalen Raum erlaubt.

Die Neutronendetektoreinheiten 3 sind mit einem Konvertergas, z.B. ¹⁰BF₃, gefüllt. Bei z.B. nur geringfügig vom Umgebungsdruck abweichendem Druck des Konvertergases können die Neutronendetektoreinheiten 3 grundsätzlich beliebig tief in Neutronenflugrichtung und damit mit entsprechend vielen in Flugrichtung der Neutronen 4 hintereinander angeordneten Anodendrähten 5 gebaut werden, so dass eine dementsprechend beliebig hohe Nachweiswahrscheinlichkeit erreicht werden kann.

Die Neutronendetektoranordnung 2 nach Fig. 1 hat allerdings noch einen Nachteil: Zwei der Seitenwände 6 der Neutronendetektoreinheiten 3 stoßen aneinander und erzeugen somit eine Blindfläche 10 mit in Neutronenflugrichtung nachfolgendem Blindvolumen, in dem eine Neutronenkonversion nicht detektiert werden kann.

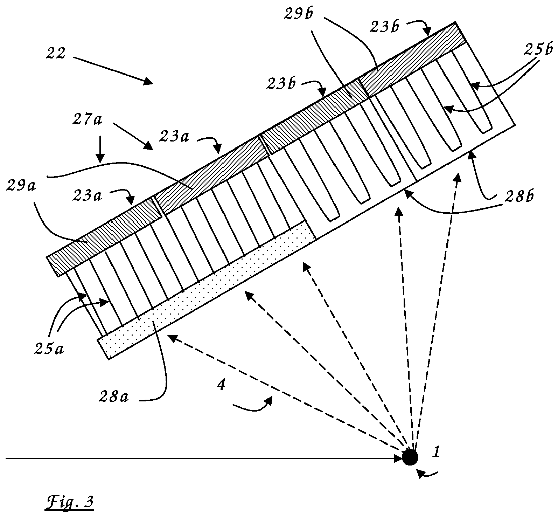

Fig. 2 zeigt demgegenüber ausschnittsweise eine Neutronendetektoranordnung 12, bei der zwei beispielhafte Neutronendetektoreinheiten 13 so ausgestaltet sind, dass die Anodendrähte 15 parallel oder nahezu parallel zur Flugrichtung der Neutronen 4 ausgerichtet und zwischen Vorderwand 18 und Rückwand 19 des jeweiligen Detektorgehäuses 17 gespannt sind. Die der Streuprobe 1 zugewandten Vorderwände 18 der Neutronendetektoreinheiten 13 können für Neutronen durchsichtig gebaut werden. Mit dieser Anordnung ist eine im Wesentlichen blindflächenfreie Bauweise der Neutronendetektoranordnung 12 möglich, da die Anodendrähte 15 nahe an dünn ausführbare Seitenwände 16 gebaut werden können. Zur weiteren Reduzierung oder auch völliger Eliminierung von Blindflächen können die Seitenwände 16 schräg zur Neutronenflugrichtung gestellt werden, so dass die Wandflächen einen Winkel von z.B. 15° zur Neutronenflugrichtung aufweisen. Des Weiteren ist es möglich, die Neutronendetektoranordnung 12 mit nur einer einzigen Neutronendetektoreinheit 13 ohne Zwischenwände zu realisieren. Dies gilt auch für alternative Ausgestaltungen, z.B. nach Fig. 3.

Fig. 3 schließlich zeigt schematisch eine Neutronendetektoranordnung 22 zur Detektion an der Streuprobe 1 gestreuter Neutronen 4, die zwei unterschiedliche Sorten von Neutronendetektoreinheiten 23a und 23b aufweist. Zwei Neutronendetektoreinheiten 23a weisen im Wesentlichen zur Flugrichtung der Neutronen 4 parallele Anodendrähte 25a auf, die ähnlich wie in Fig. 2 zwischen einer Vorderwand 28a und einer Rückwand 29a des jeweiligen Gehäuses 27a der Neutronendetektoreinheiten 23a gespannt sind. Die Vorderwand 28a ist transparent für Neutronen gestaltet und bildet somit ein Neutroneneintrittsfenster. Allerdings bilden die hier nicht dargestellten Durchführungen für die Anodendrähte 25a an der Vorderseite 28a insbesondere auch aufgrund des notwendigen Isoliermaterials Störpunkte für die Neutronen 4.

Zwei Neutronendetektoreinheiten 23b weisen Anodendrähte 25b auf, für die die hier ebenfalls nicht dargestellten Durchführungen lediglich an den Rückwänden 29b der Neutronendetektoreinheiten 23b vorgesehen sind. Die jeweilige Vorderwand 28b kann somit frei von Störpunkten für die Neutronen 4 gestaltet werden. Für eine stabile Anordnung der Anodendrähte 25b müssen diese entweder mit wenig störendem Material isoliert an der Vorderwand 28b oder den Seitenwänden fixiert werden oder mit in die Neutronendetektoreinheiten 23b hineinragenden, hier nicht dargestellten Halterungsvorrichtungen gespannt werden, die aber so gestaltet werden können, dass sie keinen wesentlichen nachteiligen Einfluss auf den Neutronenflug und die Neutronennachweiswahrscheinlichkeit haben.

In sämtlichen Figuren 1 bis 3 sind der besseren Übersichtlichkeit halber keine Kathodenelemente im Inneren der jeweiligen Neutronendetektoreinheiten 3, 13 und 23a bzw. 23b eingezeichnet. Kathodenelemente werden jeweils durch die Wandelemente des jeweiligen Detektorgehäuses gebildet sowie durch geeignete hier nicht dargestellte in die Neutronendetektoreinheiten hineinragende Strukturen, die eingerichtet sind, den Anodendrähten geeignete elektrostatische Felder zur Verfügung zu stellen.

### Bezugszeichenliste

1 Streuprobe
2 Neutronendetektoranordnung
3 Neutronendetektoreinheit
4 Neutronen
5 Anodendrähte
6 Seitenwände
7 Detektorgehäuse
8 Vorderwand
9 Rückwand
10 Blindfläche
12 Neutronendetektoranordnung
13 Neutronendetektoreinheit
15 Anodendrähte
16 Seitenwände
17 Detektorgehäuse
18 Vorderwand
19 Rückwand
22 Neutronendetektoranordnung
23 Neutronendetektoreinheit
25 Anodendrähte
26 Seitenwände
27 Detektorgehäuse
28 Vorderwand
29 Rückwand

## Patentansprüche

1. Neutronendetektoreinheit für thermische und kalte Neutronen, umfassend ein Detektorgehäuse (7, 17, 27),
Kathodenelemente,
eine Mehrzahl von drahtförmigen Anodenelementen (5, 15, 25) und
ein Konvertergas im Detektorgehäuse. (7, 17, 27),
wobei die Neutronendetektoreinheit eine Volumendetektoreinheit ist, bei der aus zumindest einer Teilanzahl der Anodenelemente (5, 15, 25) oder aus zumindest einer Teilanzahl der Anodenelemente (5, 15, 25) und zumindest einer Teilanzahl der Kathodenelemente eine Vielzahl von im Detektorgehäuse (7, 17, 27) dreidimensional verteilten Detektor-Auslesezellen zur Ortsbestimmung von Konversionsereignissen gebildet sind,
und die Neutronendetektoreinheit zur Ortsbestimmung durch Koinzidenzmessung, Ladungsteilung oder Bestimmung von Signallaufzeiten eingerichtet ist, **gekennzeichnet durch** einen Konvertergasdruck von bis zu Normaldruck.

2. Neutronendetektoreinheit nach Anspruch 1, **dadurch gekennzeichnet, dass** das Konvertergas zumindest eines der Isotope ³He, ⁶Li, ¹⁰B, ¹⁵⁵Gd, ¹⁵⁷Gd und/oder ²³⁵U enthält.

3. Neutronendetektoreinheit nach einem der Ansprüche 1 bis 2, **dadurch gekennzeichnet, dass** zusätzlich zum Konvertergas ein Festkörperkonverter vorgesehen ist.

4. Neutronendetektoreinheit nach einem der vorhergehenden Ansprüche, **dadurch gekennzeichnet, dass** die dreidimensional verteilten Detektor-Auslesezellen in mindestens zwei in Richtung ihrer Flächennormalen hintereinander liegenden Ausleseflächen angeordnet sind.

5. Neutronendetektoreinheit nach einem der vorhergehenden Ansprüche, **dadurch gekennzeichnet, dass** das Detektorgehäuse (7, 17, 27) durch eine Mehrzahl von äußeren Wandelementen (6, 8, 9, 16, 18, 19, 26, 28, 29) begrenzt ist, wobei mindestens ein für den Eintritt der zu detektierenden Neutronen vorgesehenes Wandelement (6, 8, 9, 16, 18, 19, 26, 28, 29)
a) von Mitteln zur elektrischen Durchführung für Anodenelemente (5, 15, 25) und/oder Kathodenelemente sowie
b) von Mitteln zum elektrischen Isolieren, von Mitteln zum elektrischen und/oder elektronischen Kontaktieren und/oder von Mitteln zum Fixieren von Anodenelementen und/oder Kathodenelementen
freigehalten ist.

6. Neutronendetektoreinheit nach einem der vorhergehenden Ansprüche, **dadurch gekennzeichnet, dass** mindestens ein an ein für den Eintritt der zu detektierenden Neutronen vorgesehenes Wandelement (6, 8, 9, 16, 18, 19, 26, 28, 29) angrenzendes Seitenwandelement (16) von Mitteln zur elektrischen Durchführung für Anodenelemente (5, 15, 25) und/oder Kathodenelemente freigehalten ist.

7. Neutronendetektoreinheit nach Anspruch 6, **dadurch gekennzeichnet, dass** das mindestens eine Seitenwandelement (16) von Mitteln zur elektrischen Isolierung, Mitteln zur elektrischen oder elektronischen Kontaktierung und/oder Mitteln zum Fixieren von Anodenelementen (5, 15, 25) und/oder Kathodenelementen freigehalten ist.

8. Neutronendetektoreinheit nach einem der vorherigen Ansprüche, **dadurch gekennzeichnet, dass** zumindest eine Teilanzahl der Anodenelemente (5, 15, 25) jeweils U-förmig verläuft.

9. Neutronendetektoreinheit nach einem der vorherigen Ansprüche, **dadurch gekennzeichnet, dass** das Detektorgehäuse (7, 17, 27) bei gegebener Art und gegebenem Druck des Konvertergases sowie bei gegebenem Wellenlängenbereich der zu detektierenden Neutronen eine für die Neutronenflugrichtung vorgesehene Tiefe aufweist, welche zu einer Nachweiswahrscheinlichkeit von mindestens 50 % führt.

10. Verwendung einer Neutronendetektoreinheit nach einem der Ansprüche 1 bis 9 für die Detektion kalter oder thermischer Neutronen.

11. Neutronendetektoranordnung für thermische und kalte Neutronen, **gekennzeichnet durch** mindestens eine Neutronendetektoreinheit (3, 13, 23) nach einem der Ansprüche 1 bis 9.

12. Neutronendetektoranordnung für thermische und kalte Neutronen, umfassend mindestens eine als Volumendetektoreinheit ausgebildete Neutronendetektoreinheit (3, 13, 23), wobei jede Neutronendetektoreinheit (3, 13, 23) ein Detektorgehäuse (7, 17, 27), Kathodenelemente und eine Mehrzahl von drahtförmigen Anodenelementen (5, 15, 25) aufweist und
wobei in der mindestens einen Neutronendetektoreinheit (3, 13, 23) aus zumindest einer Teilanzahl der Anodenelemente (5, 15, 25) oder aus zumindest einer Teilanzahl der Anodenelemente (5, 15, 25) und zumindest einer Teilanzahl der Kathodenelemente eine Vielzahl von im Detektorgehäuse (7, 17, 27) dreidimensional verteilten Detektor-Auslesezellen zur Ortsbestimmung von Konversionsereignissen gebildet sind,
und die Neutronendetektoreinheit (3, 13, 23) zur Ortsbestimmung durch Koinzidenzmessung, Ladungsteilung oder Bestimmung von Signallaufzeiten eingerichtet ist,
**dadurch gekennzeichnet, dass** die Neutronendetektoreinheit (3, 13, 23) oder mindestens eine der Neutronendetektoreinheiten (3, 13, 23) derart ausgerichtet ist, dass zumindest eine Teilanzahl der Anodenelemente (5, 15, 25) der mindestens einen Neutronendetektoreinheit (3, 13, 23) zumindest überwiegend in ihrer Längsausrichtung parallel oder nahezu parallel zur Flugrichtung der zu detektierenden Neutronen (4) verläuft.

13. Neutronendetektoranordnung nach Anspruch 12, **dadurch gekennzeichnet, dass** mindestens eine der Neutronendetektoreinheiten (3, 13, 23) nach einem der Ansprüche 1 bis 9 ausgebildet ist.

14. Neutronendetektoranordnung nach Anspruch 12 oder 13, **gekennzeichnet durch** eine Eintrittsöffnung für noch nicht an einer Streuprobe (1) gestreute Neutronen (4).

15. Verwendung einer Neutronendetektoranordnung nach einem der Ansprüche 12 bis 14 für die Detektion kalter oder thermischer Neutronen.

## Claims

1. A neutron detector unit for thermal and cold neutrons, comprising
a detector housing (7, 17, 27),
cathode elements,
a plurality of wire-shaped anode elements (5, 15, 25) and
a converter gas in the detector housing (7, 17, 27), wherein the neutron detector unit is a volume detector unit, in which
a plurality of detector readout cells distributed three-dimensionally in the detector housing (7, 17, 27) are formed by at least some of the anode elements (5, 15, 25) or by at least some of the anode elements (5, 15, 25) and at least some of the cathode elements for the purposes of determining the position of conversion events,
and the neutron detector unit is configured for determining the position by coincidence measurement, charge splitting or determining signal propagation times,
**characterized by** a converter gas pressure of up to normal pressure.

2. The neutron detector unit as claimed in claim 1, **characterized in that** the converter gas contains at least one of the following isotopes: ³He, ⁶Li, ¹⁰B, ¹⁵⁵Gd, ¹⁵⁷Gd and/or 235U.

3. The neutron detector unit as claimed in one of claims 1 to 2, **characterized in that** a solid-state converter is provided in addition to the converter gas.

4. The neutron detector unit as claimed in one of the preceding claims, **characterized in that** the detector readout cells distributed three-dimensionally are arranged in at least two readout areas lying in succession in the direction of the surface normals thereof.

5. The neutron detector unit as claimed in one of the preceding claims, **characterized in that** the detector housing (7, 17, 27) is delimited by a plurality of outer wall elements (6, 8, 9, 16, 18, 19, 26, 28, 29), wherein at least one wall element (6, 8, 9, 16, 18, 19, 26, 28, 29) provided for the entry of the neutrons to be detected is kept free
a) from means for the electrical lead-through for anode elements (5, 15, 25) and/or cathode elements as well as
b)from means for electrical insulation, from means for electric and/or electronic contacting and/or from means for affixing anode elements and/or cathode elements.

6. The neutron detector unit as claimed in one of the preceding claims, **characterized in that** at least one sidewall element (16) adjoining a wall element (6, 8, 9, 16, 18, 19, 26, 28, 29) provided for the entry of the neutrons to be detected is kept free from means for the electrical lead-through for anode elements (5, 15, 25) and/or cathode elements.

7. The neutron detector unit as claimed in claim 6, **characterized in that** the at least one sidewall element (16) is kept free from means for electrical insulation, from means for electric or electronic contacting and/or from means for affixing anode elements (5, 15, 25) and/or cathode elements.

8. The neutron detector unit as claimed in one of the preceding claims, **characterized in that** at least some of the anode elements (5, 15, 25) in each case extend in a U-shaped manner.

9. The neutron detector unit as claimed in one of the preceding claims, **characterized in that** the detector housing (7, 17, 27) has a depth provided for the neutron trajectory which leads to a detection probability of at least 50% for a given type and given pressure of the converter gas and a given wavelength range of the neutrons to be detected.

10. The use of a neutron detector unit as claimed in one of claims 1 to 9 for detecting cold or thermal neutrons.

11. A neutron detector arrangement for thermal and cold neutrons, **characterized by** at least one neutron detector unit (3, 13, 23) as claimed in one of claims 1 to 9.

12. A neutron detector arrangement for thermal and cold neutrons,
comprising at least one neutron detector unit (3, 13, 23) embodied as a volume detector unit, wherein each neutron detector unit (3, 13, 23) has a detector housing (7, 17, 27), cathode elements and a plurality of wire-shaped anode elements (5, 15, 25) and
wherein a plurality of detector readout cells distributed three-dimensionally in the detector housing (7, 17, 27) are formed, in the at least one neutron detector unit (3, 13, 23), by at least some of the anode elements (5, 15, 25) or by at least some of the anode elements (5, 15, 25) and at least some of the cathode elements for the purposes of determining the position of conversion events,
and the neutron detector unit (3, 13, 23) is configured for determining the location by coincidence measurement, charge splitting or determining signal propagation times,
**characterized in that** the neutron detector unit (3, 13, 23) or at least one of the neutron detector units (3, 13, 23) is aligned in such a way that, in the longitudinal direction thereof, at least some of the anode elements (5, 15, 25) of the at least one neutron detector unit (3, 13, 23) extend, at least predominantly, parallel or almost parallel to the trajectory of the neutrons (4) to be detected.

13. The neutron detector arrangement as claimed in claim 15, **characterized in that** at least one of the neutron detector units (3, 13, 23) is embodied as claimed in one of claims 1 to 9.

14. The neutron detector arrangement as claimed in claim 12 or 13, **characterized by** an entry opening for neutrons (4) not yet scattered at a scattering probe (1).

15. The use of a neutron detector arrangement as claimed in one of claims 12 to 14 for detecting cold or thermal neutrons.

## Revendications

1. Unité de détection de neutrons pour des neutrons thermiques et froids, comprenant un boîtier de détecteur (7, 17, 27),
des éléments de cathode,
une pluralité d'éléments d'anode (5, 15, 25) en forme de fils et
un gaz convertisseur dans le boîtier de détecteur (7, 17, 27),
l'unité de détection de neutrons étant une unité de détection de volume avec laquelle une pluralité de cellules de lecture de détecteur distribuées de manière tridimensionnelle dans le boîtier de détecteur (7, 17, 27) sont formées à partir d'au moins une quantité partielle des éléments d'anode (5, 15, 25) ou à partir d'au moins une quantité partielle des éléments d'anode (5, 15, 25) et au moins une quantité partielle des éléments de cathode en vue de localiser des événements de conversion,
et l'unité de détection de neutrons étant conçue pour la localisation par mesure de coïncidence, division de charge ou détermination de temps de propagation de signal,
**caractérisée par** une pression de gaz convertisseur jusqu'à la pression normale.

2. Unité de détection de neutrons selon la revendication 1, **caractérisée en ce que** le gaz convertisseur contient au moins l'un des isotopes ³He, ⁶Li, ¹⁰B, ¹⁵⁵Gd, ¹⁵⁷Gd et/ou ²³⁵U.

3. Unité de détection de neutrons selon l'une des revendications 1 à 2, **caractérisée en ce qu'**un convertisseur de corps solide est présent en plus du gaz convertisseur.

4. Unité de détection de neutrons selon l'une des revendications précédentes, **caractérisée en ce que** les cellules de lecture de détecteur distribuées de manière tridimensionnelle sont disposées dans au moins deux surfaces de lecture qui se trouvent les unes derrière les autres dans la direction des normales de leur surface.

5. Unité de détection de neutrons selon l'une des revendications précédentes, **caractérisée en ce que** le boîtier de détecteur (7, 17, 27) est délimité par une pluralité d'éléments de paroi externes (6, 8, 9, 16, 18, 19, 26, 28, 29), au moins un élément de paroi externe (6, 8, 9, 16, 18, 19, 26, 28, 29) prévu pour l'entrée des neutrons à détecter étant laissé libre
a) de moyens destinés au passage électrique pour les éléments d'anode (5, 15, 25) et/ou les éléments de cathode, ainsi que
b) de moyens destinés à l'isolation électrique, de moyens destinés à la mise en contact électrique et/ou électronique et/ou de moyens destinés à fixer des éléments d'anode et/ou des éléments de cathode.

6. Unité de détection de neutrons selon l'une des revendications précédentes, **caractérisée en ce qu'**au moins un élément de paroi latérale (16) adjacent d'un élément de paroi externe (6, 8, 9, 16, 18, 19, 26, 28, 29) prévu pour l'entrée des neutrons à détecter est laissé libre de moyens destinés au passage électrique pour les éléments d'anode (5, 15, 25) et/ou les éléments de cathode.

7. Unité de détection de neutrons selon la revendication 6, **caractérisée en ce que** l'au moins un élément de paroi latérale (16) est laissé libre de moyens destinés à l'isolation électrique, de moyens destinés à la mise en contact électrique ou électronique et/ou de moyens destinés à fixer des éléments d'anode (5, 15, 25) et/ou des éléments de cathode.

8. Unité de détection de neutrons selon l'une des revendications précédentes, **caractérisée en ce qu'**au moins une quantité partielle des éléments d'anode (5, 15, 25) s'étendent respectivement en forme de U.

9. Unité de détection de neutrons selon l'une des revendications précédentes, **caractérisée en ce que** le boîtier de détecteur (7, 17, 27), avec un type donné et une pression donnée du gaz convertisseur, ainsi qu'avec une plage de longueurs d'onde donnée des neutrons à détecter, possède une profondeur prévue pour la direction du vol des neutrons qui donne lieu à une probabilité de détection d'au moins 50 %.

10. Utilisation d'une unité de détection de neutrons selon l'une des revendications 1 à 9 pour la détection de neutrons froids ou thermiques.

11. Arrangement de détection de neutrons pour des neutrons thermiques et froids, **caractérisé par** au moins une unité de détection de neutrons (3, 13, 23) selon l'une des revendications 1 à 9.

12. Arrangement de détection de neutrons pour des neutrons thermiques et froids comprenant au moins une unité de détection de neutrons (3, 13, 23) réalisée sous la forme d'une unité de détection de volume, chaque unité de détection de neutrons (3, 13, 23) possédant un boîtier de détecteur (7, 17, 27), des éléments de cathode et une pluralité d'éléments d'anode (5, 15, 25) en forme de fils et dans l'au moins une unité de détection de neutrons (3, 13, 23), une pluralité de cellules de lecture de détecteur distribuées de manière tridimensionnelle dans le boîtier de détecteur (7, 17, 27) étant formées à partir d'au moins une quantité partielle des éléments d'anode (5, 15, 25) ou à partir d'au moins une quantité partielle des éléments d'anode (5, 15, 25) et au moins une quantité partielle des éléments de cathode en vue de localiser des événements de conversion,
et l'unité de détection de neutrons (3, 13, 23) étant conçue pour la localisation par mesure de coïncidence, division de charge ou détermination de temps de propagation de signal,
**caractérisé en ce que** l'unité de détection de neutrons (3, 13, 23) ou au moins l'une des unités de détection de neutrons (3, 13, 23) est orientée de telle sorte qu'au moins une quantité partielle des éléments d'anode (5, 15, 25) de l'au moins une unité de détection de neutrons (3, 13, 23) s'étend au moins majoritairement dans son orientation longitudinale parallèlement ou quasi-parallèlement à la direction du vol des neutrons (4) à détecter.

13. Arrangement de détection de neutrons selon la revendication 12, **caractérisé en ce qu'**au moins l'une des unités de détection de neutrons (3, 13, 23) est configurée selon l'une des revendications 1 à 9.

14. Arrangement de détection de neutrons selon la revendication 12 ou 13, **caractérisé par** une ouverture d'entrée pour les neutrons (4) qui n'ont pas encore été diffusés au niveau d'une sonde à diffusion (1).

15. Utilisation d'un arrangement de détection de neutrons selon l'une des revendications 12 à 14 pour la détection de neutrons froids ou thermiques.
